# EUROPÄISCHE PATENTANMELDUNG

(11) **EP 4 276 314 A1**
(43) Veröffentlichungstag der Anmeldung: **15.11.2023**
(21) Anmeldenummer: 23171396.7
(22) Anmeldetag: 03.05.2023
(51) Int. Cl.: F04D 29/54, F04D 19/00, F04D 29/66, F01P 5/06

(54) **LÜFTERMODUL FÜR EINEN WÄRMETAUSCHER FÜR EINEN ANTRIEB EINES KRAFTFAHRZEUGS**

(30) Priorität: 12.05.2022 DE 102022204642
(71) Anmelder: Volkswagen Aktiengesellschaft, 38440 Wolfsburg (DE)
(72) Erfinder: Diedrich, Mathias, 38165 Lehre (DE)

(57) **Zusammenfassung**

Um ein Lüftermodul (100) für einen Wärmetauscher (40) für einen Antrieb (51) eines Kraftfahrzeugs (200) zu schaffen, ist ein Lüftermodul (100) vorgeschlagen, bei welchem zumindest eine der Leitschaufeln (22) der Strömung jener von dem betreffenden Lüfterrad (10) geförderten Luft (A) eine Ausrichtung mit einem ersten Vektoranteil (V1) in Querrichtung (CD) zu der Förderrichtung (TD) und einem zweiten Vektoranteil (V2) in Förderrichtung (TD) aufzwingt, wobei der erste Vektoranteil (V1) größer als der zweite Vektoranteil (V2) ist.

## Beschreibung

Die Erfindung betrifft ein Lüftermodul für einen Wärmetauscher für einen Antrieb eines Kraftfahrzeugs gemäß Anspruch 1.

Die Erfindung betrifft ein Lüftermodul für einen Wärmetauscher für einen Antrieb eines Kraftfahrzeugs, aufweisend zumindest die folgenden Komponenten:
- zumindest ein Lüfterrad zum Fördern von Luft in einer vorbestimmten Förderrichtung;
- einen Rahmen zum Verbinden mit einem Wärmetauscher und zum Aufnehmen von dem zumindest einen Lüfterrad; und
- in Förderrichtung hinter zumindest einem der Lüfterräder eine Leiteinrichtung mit zumindest einer Leitschaufel zum Ausrichten der Strömung jener von dem betreffenden Lüfterrad geförderten Luft.

Lüftermodule sind aus dem Stand der Technik im Einsatz bei Antrieben für Kraftfahrzeuge bekannt, wobei diese meist zumindest ein Lüfterrad zum Fördern von Luft über einen Wärmetauscher aufweisen und beispielsweise als Sicherheit im Stand eines Kraftfahrzeugs aktiv eingesetzt werden. Aufgrund des Downsizing von Motoren ergibt sich eine immer höhere Drehzahl und Leistung auf geringem verfügbarem Bauraum. Eine ähnliche Problematik ergibt sich bei elektrischen Traktionsmaschinen, welche zwar eine geringere Abwärme im Verhältnis zur Leistung aufweisen, aber auf einem deutlich niedrigen Temperaturniveau gehalten werden müssen. Bei einer unzulässigen Erhöhung der Temperatur innerhalb des Antriebs ist eine Beschädigung des Antriebs möglich.

Beispielsweise ist aus der KR 2018 0 093 283 A ein Kühlmodul mit einer Luftführungseinheit bekannt, wobei die Luftführungseinheit an einer Lüfterhaubenanordnung angeordnet ist. Zudem ist ein Führungsteil bekannt, welches einen Strömungsweg der eintretenden Luft im Betrieb in einem Kraftfahrzeug führt, sodass die in das Kühlmodul eintretende Luft mittels der Luftführungseinheit innerhalb der Lüfterhaubenanordnung zielgerichtet geleitet ist.

Weiterhin ist aus der DE 31 12 630 A1 eine Kühlvorrichtung für eine flüssigkeitsgekühlte, in einem Motorraum eines Kraftfahrzeugs angeordnete, Brennkraftmaschine bekannt, wobei die Kühlvorrichtung ein der Brennkraftmaschine nachgeschaltetes Axialgebläse umfasst. Zudem ist von Seite 4 bekannt, dass die Kühlvorrichtung zusätzlich einen Kühlluftkanal umfasst, welcher in einen Kaltlufteintritt und einen Kaltluftaustritt unterteilt ist. Das darin angeordnete Axialgebläse umfasst ein turbinenradartig mit Schaufeln ausgerüstetes Laufrad, wobei vor dem Laufrad ein gehäusefestes Leitrad angeordnet ist. Die Leitwände des Leitrades sind dabei derart angeordnet, dass deren Neigung der Schaufeln des Laufrades entspricht. Zudem sind die Schaufeln gegensinnig gekrümmt, zwecks Erzielung einer im Wesentlichen parallel zur Achse des Axialgebläses verlaufenden Luftströmung.

Ferner ist aus der Zusammenfassung der EP 1 890 019 A1 eine Kühlvorrichtung mit einer Brennkraftmaschine bekannt, wobei die Kühlvorrichtung mindestens einen Wärmeübertrager, einen Lüfter und eine Luftleiteinrichtung mit mindestens einer durch eine Staudruckklappe kontrollierbaren Bypassöffnung für ein Kraftfahrzeug mit einem Unterbodenbereich aufweist. Zudem ist aus Absatz [0009] bekannt, dass die Luftleiteinrichtung über eine oder mehrere Luftführungen in Strömungsverbindung mit dem Unterbodenbereich des Fahrzeuges steht, sodass bei Erreichen einer bestimmten Fahrgeschwindigkeit ein Unterdruckbereich ausgebildet ist, sodass sich ein Sog ergibt, der zu einem vorzeitigen Öffnen der Staudruckklappe, welche sich in der Luftführung befindet, führt. Bei geöffneter Staudruckklappe ergibt sich wegen des höheren Druckgefälles zwischen dem Staudruck in der Lüfterzarge und dem Unterdruck im Unterbodenbereich ein höherer Kühlluftdurchsatz durch den Wärmeübertrager.

Der Erfindung liegt gegenüber vorbekannten Lüftermodulen die Aufgabe zugrunde, das folgende Problem mit möglichst einfachen und kostengünstigen Mitteln zu lösen:
Bei ungünstigen Bauraumverhältnissen (vorwiegend bei quer zur Hauptfahrtrichtung eingebauten Aggregaten) kann es bei hohen Luftmassenströmen dazu kommen, dass zu viel Luft gegen das direkt dahinter liegende Aggregat strömt, dort abprallt, den Druckverlust erhöht und zurückströmt. Es kann sogar zu einem Strömungsabriss an den Flügelblättern des Lüfterrads kommen. Ein Strömungsabriss resultiert darin, dass das Lüfterrad teilweise bis komplett seine Wirkung verliert (abhängig von Geschwindigkeit, Ansteuerung, und anderem).

Des Weiteren sind die Unterböden aktueller Kraftfahrzeuge sehr gut verkapselt, um einen niedrigeren cw-Wert zu erzielen. Leider führt die Verkapselung des Unterbodens auch dazu, dass die Abluft des Lüfterrads nicht direkt abströmen kann, was wiederum zu erhöhten Druckverlusten führt. Für Abluftführungen in Form von Luftkanälen, ähnlich zur Eintrittsseite, ist in den meisten aktuellen Kraftfahrzeugen kein Platz vorhanden.

Gemäß Anspruch 1 wird die obige Aufgabe gelöst, indem zumindest eine der Leitschaufeln der Strömung jener von dem betreffenden Lüfterrad geförderten Luft eine Ausrichtung mit einem ersten Vektoranteil in Querrichtung zu der Förderrichtung und einem zweiten Vektoranteil in Förderrichtung aufzwingt, wobei der erste Vektoranteil größer als der zweite Vektoranteil ist.

Vorteilhafte Weiterbildungen der Erfindung sind in den Unteransprüchen gekennzeichnet.

Die Erfindung betrifft ein Lüftermodul für einen Wärmetauscher für einen Antrieb eines Kraftfahrzeugs, aufweisend zumindest die folgenden Komponenten:
- zumindest ein Lüfterrad zum Fördern von Luft in einer vorbestimmten Förderrichtung;
- einen Rahmen zum Verbinden mit einem Wärmetauscher und zum Aufnehmen von dem zumindest einen Lüfterrad; und
- in Förderrichtung hinter zumindest einem der Lüfterräder eine Leiteinrichtung mit zumindest einer Leitschaufel zum Ausrichten der Strömung jener von dem betreffenden Lüfterrad geförderten Luft.

Das Lüftermodul ist vor allem dadurch gekennzeichnet, dass zumindest eine der Leitschaufeln der Strömung jener von dem betreffenden Lüfterrad geförderten Luft eine Ausrichtung mit einem ersten Vektoranteil in Querrichtung zu der Förderrichtung und einem zweiten Vektoranteil in Förderrichtung aufzwingt, wobei der erste Vektoranteil größer als der zweite Vektoranteil ist.

Für die Lüfterräder wird rein für das Verständnis auf die oben zitierten Druckschriften verwiesen, deren Gegenstand hiermit zumindest insoweit zum Bestandteil des Offenbarungsgehalts gemacht wird. Ein Lüfterrad ist beispielsweise mit axialer, also zu der Rotationsachse des Lüfterrads paralleler, Förderrichtung ausgeführt. Die rotierenden Lüfterschaufeln des Lüfterrads sind bevorzugt für Luft im Bereich von -40°C bis +90°C, beispielsweise in guter Näherung bei Raumtemperatur, hinsichtlich Förderrate, Lautstärke, Laufruhe und/oder ähnlichem optimiert.

Der Rahmen ist ein, bevorzugt einstückiges, Bauelement zum Montieren und Halten von einigen oder allen Komponenten des Lüftermoduls bei einem Wärmetauscher. Der Rahmen ist separat relativ zu einem Wärmetauscher in einer Einbausituation, beispielsweise einem Motorraum, montierbar. Alternativ ist der Rahmen unmittelbar an einem Wärmetauscher befestigbar. Beispielsweise ist der Rahmen ein zumindest im Strömungspfad für die zu fördernde Luft filigranes und/oder strömungsoptimiertes Bauelement. Beispielsweise ist der Rahmen ein Guss-Bauteil. Beispielsweise umfasst der Rahmen Aluminium und/oder Kunststoff.

Die Förderrichtung ist beispielsweise für eine möglichst strömungswiderstandsarme Durchströmung eines Wärmetauschers eingerichtet, beispielsweise ist die Förderrichtung parallel zu einer Ausrichtung des, bevorzugt gesamten, mittleren oder lüfterrad-seitigen, Fluidpfads für die durch den Wärmetauscher hindurchgeförderte Luft.

Die Leiteinrichtung ist zum Aufzwingen einer Ausrichtung der Strömung der mittels des Lüfterrads geförderten Luft eingerichtet. Beispielsweise wird bei einem Lüfterrad mit axialer Förderrichtung ein Drallanteil aufgezwungen. Bevorzugt wird mittels der Leiteinrichtung ein solcher Drallanteil aufgehoben oder zumindest deutlich reduziert.

In einer Ausführungsform ist das Lüftermodul in Förderrichtung hinter einem Wärmetauscher angeordnet.

Es sei darauf hingewiesen, dass das Lüftermodul beziehungsweise ein zugeordneter Wärmetauscher zwar bevorzugt für eine Traktionsmaschine, beispielsweise eine Verbrennungskraftmaschine oder einen Elektro-Motor zum Vortrieb eines Kraftfahrzeugs, einsetzbar ist, aber auch für andere Komponenten, bevorzugt eines Antriebs für den Vortrieb eines Kraftfahrzeugs, beispielsweise ein Getriebe, eine Batterie oder eine Leistungselektronik.

In einer vorteilhaften Ausführungsform des Lüftermoduls umfasst eine solche Leitschaufel der Leiteinrichtung zum Aufzwingen einer Ausrichtung der Strömung einen ersten Schaufelabschnitt und einen zweiten Schaufelabschnitt, wobei der erste Schaufelabschnitt zum Reduzieren des mittels des betreffenden Lüfterrads induzierten Dralls der Strömung der geförderten Luft eingerichtet ist.

In einer Ausführungsform sind die zwei Schaufelabschnitte bei zumindest einer, bevorzugt bei allen, der Leitschaufeln miteinander einstückig gebildet. In einer alternativen Ausführungsform sind die zwei Schaufelabschnitte bei zumindest einer, bevorzugt bei allen, der Leitschaufeln voneinander separat gebildet. In einer Ausführungsform ist der erste Schaufelabschnitt, zumindest funktional, konventionell ausgeführt.

In einer vorteilhaften Ausführungsform des Lüftermoduls umfasst die Leiteinrichtung ein von dem Rahmen separates Leitelement.

In einer vorteilhaften Ausführungsform des Lüftermoduls ist das Leitelement mittels einer zentralen Befestigung des Rahmens fixiert.

In einer vorteilhaften Ausführungsform des Lüftermoduls ist zumindest eine der Leitschaufeln nach einer Ausführungsform gemäß der obigen Beschreibung ausgeführt, wobei der erste Schaufelabschnitt mit dem Rahmen sowie der zweite Schaufelabschnitt mit dem Leitelement einstückig gebildet ist.

Das Leitelement ist beispielsweise ein zumindest im Strömungspfad für die zu fördernde Luft filigranes und/oder strömungsoptimiertes Bauelement. Beispielsweise ist der Rahmen ein Guss-Bauteil. Beispielsweise umfasst der Rahmen Aluminium und/oder Kunststoff. Bevorzugt ist das Leitelement ein nachrüstbares Bauelement, wobei bei einer Prüfung bei der Erst-Inbetriebnahme des Lüftermoduls aufgrund der spezifischen Bauraumsituation entschieden wird, ob ein Leitelement eingesetzt wird. Die Entscheidung wird beispielsweise abhängig von einem ermittelten Gegendruckniveau und/oder Strömungsabriss getroffen. Alternativ oder zusätzlich ist das Leitelement in bestehende Konstruktionen als Nachrüstkomponente einsetzbar.

In einer vorteilhaften Ausführungsform des Lüftermoduls sind von einer Mehrzahl von Leitschaufeln die jeweiligen der Strömung aufgezwungenen Ausrichtungen voneinander verschieden.

Für einen möglichst geringen Strömungswiderstand ist bei dieser Ausführungsform die Ausrichtung der Strömung möglichst kleinteilig aufgefächert, sodass Stauungseffekte aufgrund von einer Verdichtung vermieden sind, bevorzugt ein Diffusor für die beispielsweise vor den Leitschaufeln, bevorzugt vor dem zweiten Schaufelabschnitt, in Förderrichtung, beispielsweise axial, ausgerichtete Strömung gebildet ist. In einer Ausführungsform ist ein Anteil des Volumenstroms mit einem neu aufgezwungenen größeren ersten Vektoranteil nach unten, ein Volumenstromanteil nach links und ein Volumenstromanteil nach rechts gerichtet, und/oder weitere Volumenstromanteile mit Vektorkomponenten des ersten Vektoranteils in zwei der vorgenannten Richtungen quer zu der Förderrichtung.

Gemäß einem weiteren Aspekt ist ein Kraftfahrzeug vorgeschlagen, welches zumindest die folgenden Komponenten aufweist:
- einen Antrieb zum Erzeugen eines Vortriebsmoments;
- einen Motorraum zum Aufnehmen zumindest eines Teils des Antriebs;
- zumindest ein Vortriebsrad, mittels welchem das Vortriebsmoment des Antriebs in einen Vortrieb des Kraftfahrzeugs umsetzbar ist;
- zumindest einen Wärmetauscher zum Temperieren zumindest eines Teils des Antriebs;
- zumindest ein Lüftermodul nach einer Ausführungsform gemäß der obigen Beschreibung zum Fördern von Luft durch den zumindest einen Wärmetauscher.

Der Antrieb zum Vortrieb des Kraftfahrzeugs umfasst eine Traktionsmaschine, beispielsweise eine Verbrennungskraftmaschine und/oder zumindest eine elektrische Antriebsmaschine, und bevorzugt weiterhin eine Traktionsbatterie, ein Getriebe, ein Differenzial und/oder weiteres.

In einer vorteilhaften Ausführungsform des Kraftfahrzeugs ist die Förderrichtung des zumindest einen Lüfterrads des Lüftermoduls der Hauptfahrtrichtung des Kraftfahrzeugs entgegengerichtet.

In einer vorteilhaften Ausführungsform des Kraftfahrzeugs ist der Motorraum gekapselt, wobei ein minimaler Abstand zwischen zumindest einem der Lüfterräder des Lüftermoduls und einem unmittelbar angrenzenden Aggregat geringer als 5 cm, bevorzugt geringer als 3 cm, ist.

Ausführungsbeispiele der Erfindung werden nachstehend anhand der Zeichnung näher erläutert. Es zeigen:
- Fig. 1:: in einer frontalen Ansicht ein Lüftermodul mit einer Leiteinrichtung,
- Fig. 2:: in einer detaillierten Schnittansicht das Lüftermodul mit dem zweiten Lüfterrad gemäß Fig. 1,
- Fig. 3:: in einer detaillierten Schnittansicht das Lüftermodul mit dem ersten Lüfterrad gemäß Fig. 1,
- Fig. 4:: in einer perspektivischen Detailansicht das Lüftermodul mit dem ersten Lüfterrad gemäß Fig. 1 und Fig. 3, und
- Fig. 5:: ein Kraftfahrzeug mit einem Motorraum.

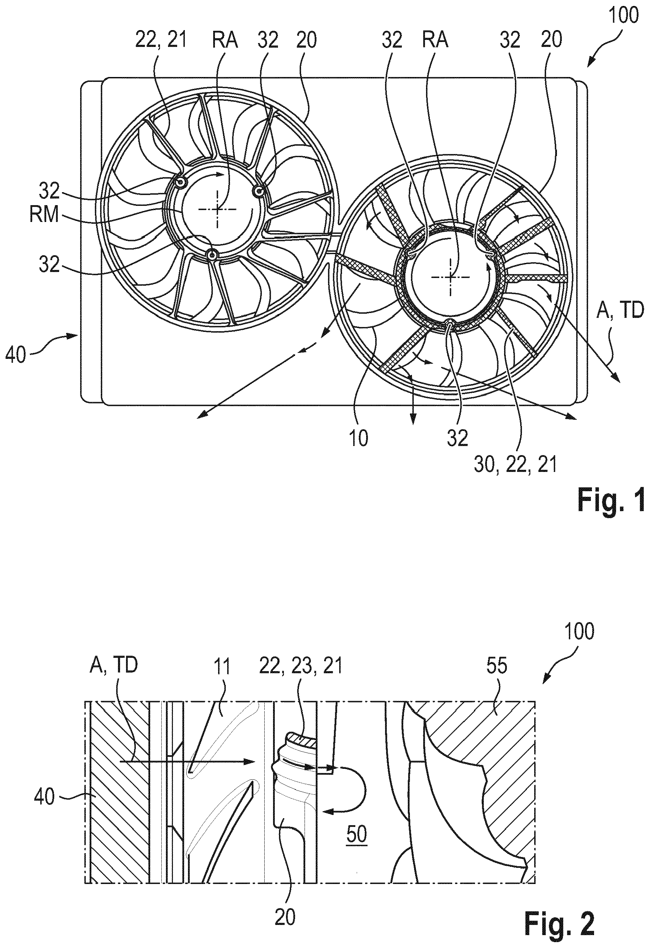

Fig. 1 zeigt ein Lüftermodul 100 mit einer Leiteinrichtung 21 in einer frontalen Ansicht. Das Lüftermodul 100 umfasst in diesem Ausführungsbeispiel ein erstes Lüfterrad 10 und ein zweites Lüfterrad 11, welche zum Fördern von Luft A in eine vorbestimmte Förderrichtung TD eingerichtet sind. Die Förderrichtung TD ist hier axial ausgerichtet, also parallel zu der hier senkrecht auf der Bildebene ausgerichteten Rotationsachse RA des jeweiligen Lüfterrads 10, 11. Die Lüfterräder 10, 11 induzieren beim Fördern der Luft A, aufgrund der Drehimpulserhaltung, einen Drall RM (beim zweiten Lüfterrad 11 beispielhaft angedeutet) innerhalb der geförderten Luft A. Eine drallbehaftete Strömung ist nur bedingt entlang einer Förderrichtung TD leitbar, weshalb hier an den Lüfterrädern 10, 11 jeweils eine Leiteinrichtung 21 angeordnet ist. Die Leiteinrichtung 21 ist zum Reduzieren des Dralls RM eingerichtet.

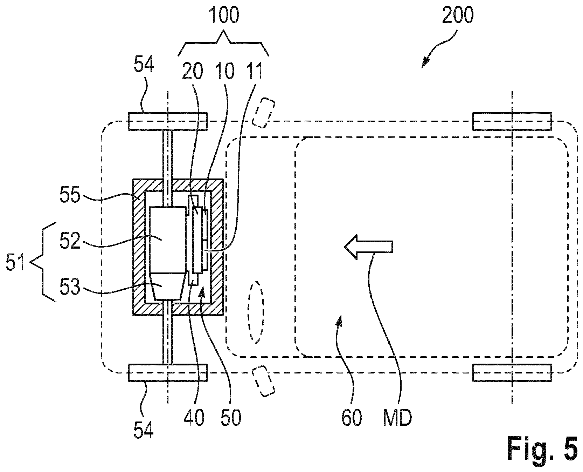

Die Lüfterräder 10, 11 sind hier rein optional von einem gemeinsamen, einstückigen Rahmen 20 aufgenommen, wobei der Rahmen 20 neben der Aufnahme der Lüfterräder 10, 11 zum Verbinden mit einem Wärmetauscher 40 eingerichtet ist. Dies ist hier nicht dargestellt, vergleiche dazu Fig. 2 und/oder Fig. 5. In einer alternativen Ausführungsform ist für jeweils ein Lüfterrad 10, 11 ein separater Rahmen 20 und/oder der Rahmen 20 mehrteilig ausgeführt. Zudem umfasst der Rahmen 20 zumindest zu einem Teil die Leiteinrichtung 21, hier nämlich den ersten Schaufelabschnitt 23, und/oder ist zum Aufnehmen der gesamten Leiteinrichtung 21, beziehungsweise eines weiteren Teils, nämlich hier dem separaten Leitelement 30, der Leiteinrichtung 21 eingerichtet. Das Leitelement 30 ist bei dieser Ausführungsform mittels einer Befestigung 32 an dem Rahmen 20 fixiert. In diesem Ausführungsbeispiel ist das Leitelement 30 mit drei Befestigungen 32 an dem Rahmen 20 fixiert. Die Befestigung 32 ist beispielsweise als eine Verschraubung, ein Niet, eine Klebung oder eine Schweißnaht ausgeführt, wobei in diesem Ausführungsbeispiel die Befestigung 32 als ein Klipp ausgeführt ist. Die Leiteinrichtung 21 umfasst, hier rein optional eine Mehrzahl von, Leitschaufeln 22 mit einem ersten Schaufelabschnitt 23, hier als Teil des Rahmens 20. Für Details vergleiche Fig. 2. Weiterhin umfasst die Leiteinrichtung 21, hier rein optional eine Mehrzahl von, Leitschaufeln 22 mit einem zweiten Schaufelabschnitt 31, hier rein optional als Teil eines separaten Leitelements 30. Es sei darauf hingewiesen, dass nicht zwangsläufig alle Leitschaufeln 22 sowohl einen ersten Schaufelabschnitt 23 als auch einen zweiten Schaufelabschnitt 31 aufweisen. Bevorzugt umfassen alle Leitschaufeln 22 zumindest einen ersten Schaufelabschnitt 23.

Zumindest eine der Leitschaufeln 22 beziehungsweise, hier zumindest maßgeblich, der jeweils erste Schaufelabschnitt 23, ist zum Aufzwingen einer Ausrichtung der Strömung entlang der Förderrichtung TD und damit einer Reduzierung des Dralls RM eingerichtet. Zumindest eine der Leitschaufeln 22 beziehungsweise, hier zumindest maßgeblich, der jeweils zweite Schaufelabschnitt 31, ist zum Aufzwingen einer Ausrichtung der Strömung quer zu der Förderrichtung TD eingerichtet.

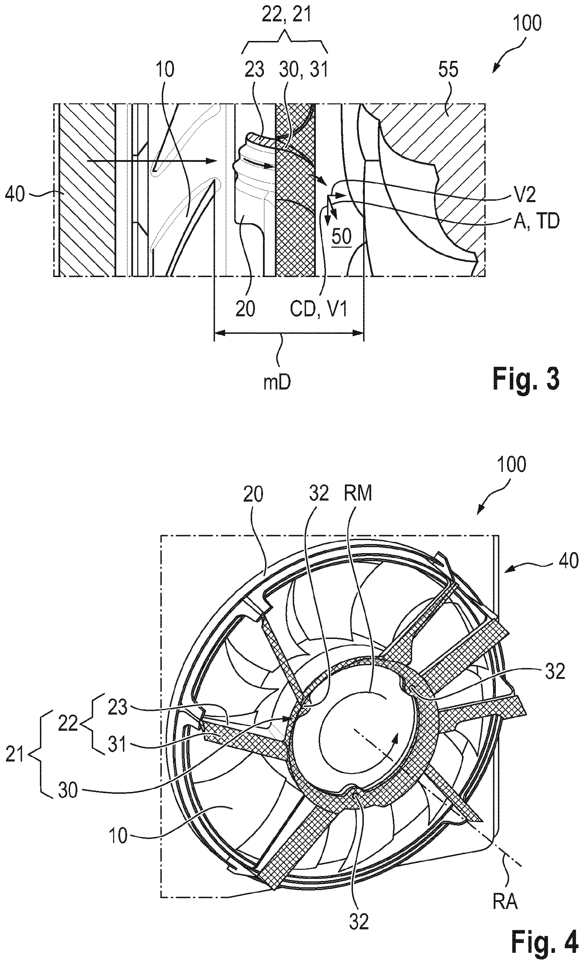

Die Leitschaufeln 22 mit dem zweiten Schaufelabschnitt 31 sind derart orientiert, dass diese die Strömung beziehungsweise Förderrichtung TD der Luft A mit einem möglichst großen ersten Vektoranteil V1, also quer zu der Förderrichtung TD, und zudem infolge der voneinander verschiedenen Ausrichtungen möglichst diffusen und dabei auf möglichst direkten Weg von dem Lüftermodul 100 weg fördern, hier schematisch an dem ersten Lüfterrad 10 mittels Pfeilen angedeutet. Ein verbleibender Volumenstrom entlang der Förderrichtung des ersten Lüfterrads 10, also parallel zu der Rotationsachse RA, ist damit gering. Ein infolge einer hier nicht dargestellten nah angeordneten Wand eines angrenzenden Bauteils erzeugter Staudruck ist damit verringert und ein resultierender Strömungsabriss an den Lüfterschaufeln des ersten Lüfterrads 10 nahezu ausgeschlossen. Eine solche nah angeordnete Wand ist beispielsweise ein aggregatefestes Bauteil bzw. Nebenaggregat 55 (Generator, Ölabscheider, Rohre, etc.). Eine solche nah angeordnete Wand ist beispielsweise minimal 3 cm austrittsseitig von dem ersten Lüfterrad 10 beabstandet. Für Details dazu vergleiche Fig. 2 und Fig. 3.

Fig. 2 zeigt das Lüftermodul 100 mit dem zweiten Lüfterrad 11 gemäß Fig. 1 in einer detaillierten Schnittansicht, wobei der Schnitt versetzt parallel zu der Rotationsachse RA wie in Fig. 1 dargestellt durch eine Lüfterschaufel des zweiten Lüfterrads 11 und eine zugeordnete Leitschaufel 22 der Leiteinrichtung 21 geführt ist. Das zweite Lüfterrad 11 fördert Luft A entlang einer Förderrichtung TD aus einem Wärmetauscher 40, welcher darstellungsgemäß links angeordnet ist und in einem Hauptbetriebszustand heiße Luft A in einen Motorraum 50 abgibt. Die Ausrichtung der Strömung ist von dem Lüftermodul 100 weg hin zu einem unmittelbar angrenzenden Aggregat, beispielsweise dem Motor 52 beziehungsweise dessen Verkapselung 56 oder anderen Anbauteilen 55, welche im Betrieb in einem Kraftfahrzeug 200 auftretende Verwirbelungen vermindert, sich also positiv auf den c_{W}-Wert auswirkt, aber auch thermisch isolierend wirkt und den Bauraum einschränkt. In Strömungsrichtung hinter dem zweiten Lüfterrad 11 ist die Leiteinrichtung 21 angeordnet, wobei die Leiteinrichtung 21 eine Mehrzahl von Leitschaufeln 22 umfasst. Die Leitschaufeln 22, welche hier mit dem Rahmen 20 einstückig gebildet sind, weisen in diesem Ausführungsbeispiel einzig einen ersten Schaufelabschnitt 23 auf, wobei der (erste) Schaufelabschnitt 23 der Strömung der (heißen) Luft A eine Ausrichtung weg von dem direkten Auftreffen auf die dahinterliegenden Bauteile 55 aufzwingt und lediglich einen induzierten Drall RM reduziert oder aufhebt. Somit kommt es an der sehr nahen Wand, welche hier von den dahinterliegenden Bauteilen 55 gebildet wird, zu einer Stauung der Strömung beziehungsweise einer Hitze-Anstauung und damit zu Leistungseinbußen des Antriebs 51. Auch ist wie gezeigt eine Rückumkehr der Ausrichtung möglich, womit es zu einem Strömungsabriss an den Lüfterschaufeln des zweiten Lüfterrads 11, und damit zu einer Wirkungslosigkeit kommen kann. Beispielsweise ist die Wand hier austrittsseitig von dem zweiten Lüfterrad 11 nur 3 cm bis 5 cm beabstandet.

In diesem Ausführungsbeispiel sind die Leitschaufeln 22 beziehungsweise der erste Schaufelabschnitt 23 ausschließlich zum Reduzieren des Dralls RM, wie in Fig. 1 angedeutet, und zum Ausrichten der Strömung in Förderrichtung TD mit möglichst geringem Drallanteil eingerichtet.

Fig. 3 zeigt das Lüftermodul 100 mit dem ersten Lüfterrad 10 gemäß Fig. 1 und Fig. 2 in einer detaillierten Schnittansicht. Das gezeigte Ausführungsbeispiel unterscheidet sich dabei von Fig. 2 ohne Ausschluss der Allgemeinheit rein der Übersichtlichkeit halber einzig darin, dass die Leiteinrichtung 21 zusätzlich ein, hier rein optional von dem Rahmen 20 separates, Leitelement 30 aufweist und die Leitschaufeln 22 zusätzlich zu dem ersten Schaufelabschnitt 23 einen zweiten Schaufelabschnitt 31 umfassen. Für den ersten Schaufelabschnitt 23 und die Funktion des Lüfterrads 10 wird daher auf die vorhergehende Beschreibung verwiesen. Der zweite Schaufelabschnitt 31 ist in der Darstellung rechts des ersten Schaufelabschnitts 23 angeordnet. In diesem Ausführungsbeispiel sind die Leitschaufeln 22 zweistückig ausgeführt, wobei der erste Schaufelabschnitt 23 rein optional mit dem Rahmen 20 einstückig gebildet ist und der zweite Schaufelabschnitt 31 mit dem Leitelement 30 einstückig gebildet ist. Das Leitelement 30 mit dem zweiten Schaufelabschnitt 31 ist hier an den ersten Schaufelabschnitt 23 unmittelbar angrenzend angeordnet, sodass an der Kontaktstelle der Schaufelabschnitte 23, 31 kein Strömungsabriss erfolgt, bevorzugt ein störungsfreier Strömungsübergang geschaffen ist. Die Aufgabe des zweiten Schaufelabschnitts 31 ist es, der Strömung der von dem ersten Lüfterrad 10 geförderten Luft A eine Ausrichtung quer zu der Förderrichtung TD aufzuzwingen, sodass ein Anteil des Volumenstroms, welcher gegen die dahinterliegenden Bauteile 55 strömt, erheblich verringert ist. Die dahinterliegenden Bauteile 55, welche hier die Wand des unmittelbar angrenzenden Aggregats, nämlich des Motors 52 bilden, weisen hier einen minimalen Abstand mD ausgangsseitig zu dem ersten Lüfterrad 10 von beispielsweise 3 cm bis maximal 5 cm auf.

Die Förderrichtung TD lässt sich hier in einem Polarkoordinatensystem in der Rotationsachse RA des ersten Lüfterrads 10 in zwei Vektoranteile V1, V2 aufteilen, wobei der zweiter Vektoranteil V2 parallel zu der Rotationsachse RA, also axial, ausgerichtet ist, und der erste Vektoranteil V1 darstellungsgemäß quer dazu, also in Querrichtung CD, ausgerichtet ist. Der erste Vektoranteil V1 ist damit in radialer Richtung, also nach innen oder außen, und/oder in Umfangsrichtung beziehungsweise tangential ausgerichtet. Hier ist aufgrund der Bildebene die tangentiale Vektorkomponente des ersten Vektoranteils V1 dargestellt. Gleichwohl ist, allein oder bevorzugt zudem, eine Vektorkomponente des ersten Vektoranteils V1 radial, bevorzugt nach außen, gerichtet. Hiermit ist im Vergleich zu einer Ausführungsform wie in Fig. 2 gezeigt eine verlängerte Lauflänge über die Leitschaufel 22 geschaffen. Damit ist ein sanftes Aufzwingen einer Ausrichtung der Strömung wie dargestellt erzielbar, sodass also der erste Vektoranteil V1, also in Querrichtung CD, größer ist als der zweite Vektoranteil V2, also in Förderrichtung TD. Somit ergibt sich eine Resultierende für die Förderrichtung TD der Strömung, welche bis hin zu parallel zu der unmittelbar angrenzenden Wand, nämlich hier den dahinterliegenden Bauteilen 55 bzw. dem Motor 52, orientiert ist. Somit ist eine Leistungssteigerung des Lüftermoduls 100 in einem räumlich stark beschränkten Motorraum 50 darstellbar, ohne einen hohen Staudruck oder gar einen Strömungsabriss über dem ersten Lüfterrad 10 zu provozieren.

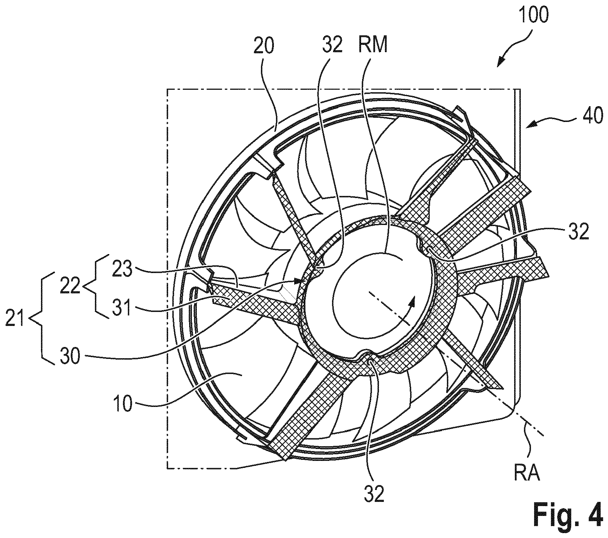

Fig. 4 zeigt das Lüftermodul 100 mit dem ersten Lüfterrad 10 gemäß Fig. 1 und Fig. 3 in einer perspektivischen Detailansicht, wobei in dieser Darstellung die zweistückig ausgeführten Leitschaufeln 22 besonders gut zu erkennen sind. Dabei umfasst hier rein optional jede Leitschaufel 22 in der Leiteinrichtung 21 einen ersten Schaufelabschnitt 23 und einen zweiten Schaufelabschnitt 31, wobei in diesem Ausführungsbeispiel der erste Schaufelabschnitt 23 einstückig mit dem Rahmen 20 gebildet ist und der zweite Schaufelabschnitt 31 einstückig mit dem Leitelement 30 gebildet ist. Das Leitelement 30 ist dazu in unmittelbarem Kontakt zu dem ersten Schaufelabschnitt 23 angeordnet und an dem Rahmen 20 mittels, hier drei separaten Punkten, einer Befestigung 32 fixiert, sodass eine strömungstechnisch ununterbrochene, bevorzugt stetige, Lauffläche der Leitschaufeln 22 gebildet ist.

Es ist hier ebenfalls die Leiteinrichtung 21 zu erkennen, welche in diesem Ausführungsbeispiel bei dem ersten Lüfterrad 10 das Leitelement 30 mit dem zweiten Schaufelabschnitt 31 und den ersten Schaufelabschnitt 23, welcher einstückig mit dem Rahmen 20 gebildet ist, umfasst.

Fig. 5 zeigt ein Kraftfahrzeug 200 mit einem Motorraum 50 in einer schematischen Ansicht von oben, wobei der oder ein Teil des Motorraums 50 eingekapselt ist. Innerhalb des Motorraums 50 ist ein Antrieb 51 angeordnet, wobei der Antrieb 51 in diesem Ausführungsbeispiel einen Motor 52, beispielsweise als eine elektrische Traktionsmaschine ausgeführt, und ein Getriebe 53 umfasst. Es sei darauf hingewiesen, dass der Antrieb 51 weitere Komponenten wie beispielsweise eine Batterie und/oder ein Differenzial umfasst, welche hier nicht dargestellt sind, und diese Komponenten nicht zwangsläufig innerhalb der Verkapselung 56 angeordnet sind. Die Verkapselung 56 ist für einen vorteilhaften c_{W}-Wert des Kraftfahrzeugs 200 den Motorraum 50 umschließend angeordnet, und weist zwangsläufig eine hohe fluidische Dichtigkeit und hohe thermisch-isolierende Eigenschaften auf. Der Antrieb 51 ist zum Erzeugen eines Vortriebsmoments eingerichtet, wobei das Vortriebsmoment über die Achse zwei Vortriebsräder 54 in Rotation versetzt und das Vortriebsmoment somit auf den Untergrund überträgt, sodass das Kraftfahrzeug 200 entlang einer Hauptfahrtrichtung MD, bevorzugt auch in der Gegenrichtung, antreibbar ist. Der Antrieb 51 erzeugt Abwärme, welche aus dem Motor 52 abtransportiert werden muss. Dieser Wärmetransport erfolgt mittels eines Wärmetauschers 40, welcher in fluidischen Kontakt mit dem Motor 52 des Antriebs 51 steht. Der Wärmetauscher 40 ist dabei zum Temperieren des Motors 52 eingerichtet, wobei zum Erhöhen der Konvektion über dem Wärmetauscher 40 sowie zum Vermeiden eines Wärmestaus innerhalb des isolierten Motorraums 50 ein Lüftermodul 100 eingesetzt ist. Das Lüftermodul 100 ist zum Fördern der Luft A durch den Wärmetauscher 40 eingerichtet und ist bevorzugt wie zuvor beschrieben mit entsprechenden Leitschaufeln 22 ausgeführt.

### Bezugszeichenliste

- 100: Lüftermodul

- 200: Kraftfahrzeug

- 10: erstes Lüfterrad
- 11: zweites Lüfterrad

- 20: Rahmen
- 21: Leiteinrichtung
- 22: Leitschaufel
- 23: erster Schaufelabschnitt

- 30: Leitelement
- 31: zweiter Schaufelabschnitt
- 32: Befestigung

- 40: Wärmetauscher

- 50: Motorraum
- 51: Antrieb
- 52: Motor
- 53: Getriebe
- 54: Vortriebsrad
- 55: dahinterliegende Bauteile
- 56: Verkapselung

- 60: Fahrerkabine

- A: Luft
- CD: Querrichtung
- MD: Hauptfahrtrichtung
- mD: minimaler Abstand
- RA: Rotationsachse
- RM: Drall
- TD: Förderrichtung
- V1: erster Vektoranteil
- V2: zweiter Vektoranteil

## Patentansprüche

1. Lüftermodul (100) für einen Wärmetauscher (40) für einen Antrieb (51) eines Kraftfahrzeugs (200), aufweisend zumindest die folgenden Komponenten:
- zumindest ein Lüfterrad (10,11) zum Fördern von Luft (A) in einer vorbestimmten Förderrichtung (TD);
- einen Rahmen (20) zum Verbinden mit einem Wärmetauscher (40) und zum Aufnehmen von dem zumindest einen Lüfterrad (10,11); und
- in Förderrichtung (TD) hinter zumindest einem der Lüfterräder (10) eine Leiteinrichtung (21) mit zumindest einer Leitschaufel (22) zum Ausrichten der Strömung jener von dem betreffenden Lüfterrad (10) geförderten Luft (A),
**dadurch gekennzeichnet, dass**
zumindest eine der Leitschaufeln (22) der Strömung jener von dem betreffenden Lüfterrad (10) geförderten Luft (A) eine Ausrichtung mit einem ersten Vektoranteil (V1) in Querrichtung (CD) zu der Förderrichtung (TD) und einem zweiten Vektoranteil (V2) in Förderrichtung (TD) aufzwingt,
wobei der erste Vektoranteil (V1) größer als der zweite Vektoranteil (V2) ist.

2. Lüftermodul (100) nach Anspruch 1, wobei
eine solche Leitschaufel (22) der Leiteinrichtung (21) zum Aufzwingen einer Ausrichtung der Strömung einen ersten Schaufelabschnitt (23) und einen zweiten Schaufelabschnitt (31) umfasst,
wobei der erste Schaufelabschnitt (23) zum Reduzieren des mittels des betreffenden Lüfterrads (10) induzierten Dralls (RM) der Strömung der geförderten Luft (A) eingerichtet ist.

3. Lüftermodul (100) nach Anspruch 1 oder Anspruch 2, wobei
die Leiteinrichtung (21) ein von dem Rahmen (20) separates Leitelement (30) umfasst, wobei bevorzugt das Leitelement (30) mittels einer zentralen Befestigung (32) des Rahmens (20) fixiert ist, und/oder
wobei bevorzugt zumindest eine der Leitschaufeln (22) gemäß Anspruch 2 ausgeführt ist,
wobei der erste Schaufelabschnitt (23) mit dem Rahmen (20) sowie der zweite Schaufelabschnitt (31) mit dem Leitelement (30) einstückig gebildet ist.

4. Lüftermodul (100) nach einem der vorhergehenden Ansprüche, wobei von einer Mehrzahl von Leitschaufeln (22) die jeweiligen der Strömung aufgezwungenen Ausrichtungen voneinander verschieden sind.

5. Kraftfahrzeug (200), aufweisend zumindest die folgenden Komponenten:
- einen Antrieb (51) zum Erzeugen eines Vortriebsmoments;
- einen Motorraum (50) zum Aufnehmen zumindest eines Teils des Antriebs (51);
- zumindest ein Vortriebsrad (54), mittels welchem das Vortriebsmoment des Antriebs (51) in einen Vortrieb des Kraftfahrzeugs (200) umsetzbar ist;
- zumindest einen Wärmetauscher (40) zum Temperieren zumindest eines Teils des Antriebs (51);
- zumindest ein Lüftermodul (100) nach einem der vorhergehenden Ansprüche zum Fördern von Luft (A) durch den zumindest einen Wärmetauscher (40).

6. Kraftfahrzeug (200) nach Anspruch 5, wobei
die Förderrichtung (TD) des zumindest einen Lüfterrads (10,11) des Lüftermoduls (100) der Hauptfahrtrichtung (MD) des Kraftfahrzeugs (200) entgegengerichtet ist.

7. Kraftfahrzeug (200) nach Anspruch 5 oder Anspruch 6, wobei
der Motorraum (50) gekapselt ist,
wobei ein minimaler Abstand (mD) zwischen zumindest einem der Lüfterräder (10) des Lüftermoduls (100) und einem unmittelbar angrenzenden Aggregat geringer als 5 cm, bevorzugt geringer als 3 cm, ist.
